# EUROPEAN PATENT APPLICATION

(11) **EP 4 568 185 A1**
(43) Date of publication of application: **11.06.2025**
(21) Application number: 23848794.6
(22) Date of filing: 25.07.2023
(51) Int. Cl.: H04L 12/28, G02B 6/02, G16Y 40/10

(54) **SYSTEM FOR MONITORING OPTICAL FIBRE DISTRIBUTION NETWORKS**

(30) Priority: 04.08.2022 BR 102022015415
(71) Applicant: Furukawa Electric Latam S.A., 81460-120 Curitiba - PR (BR)
(72) Inventor: BALAN, Mariana Pauli, 82200-000 Curitiba - PR (BR); MAYER, Mateus, 80420-190 Curitiba - PR (BR); OLEINIK, Daniel Alexandre, 81070-320 Curitiba - PR (BR)
(74) Representative: Patentanwälte Geyer, Fehners & Partner mbB
(86) International application number: PCT/BR2023/050242
(87) International publication number: WO 2024/026548

(57) **Abstract**

The system comprises a sensor (S) mounted on a passive element (EP) of the network, defined by optical boxes or optical fibres, to detect operational parameters of the passive element (EP) and periodically produce data packets that represent reference operating conditions and, in real time, data packages that represent anomalous operating conditions detected by the sensor (S); an input portal (PE) maintained in communication with a group of sensors (S); a server (SE) that receives data packets from the input portals (PE), decoding and authenticating them; and a platform (IoT) receiving, from the server (SE), the data packets of reference operating conditions and of the anomalous operating conditions, storing them and making them available to a network administrator (AR), to be selectively or automatically sent to a field technician (TC), via a mobile computing device (DCM).

## Description

### Field of the invention

The present invention refers to a system to allow the monitoring of passive elements of optical fibre distribution networks, such as optical splice boxes, optical derivation boxes or optical termination boxes and the optical fibres themselves, aiming to facilitate and automatize the management of the preventive and corrective field activities in said networks, through the sensing of at least part of their elements, enabling agility and precision in the geographic location of problems or operational anomalies of these elements and considerably reducing operational costs not only for carrying out corrective actions but also for preventive maintenance operations in these fibre optic networks, in accordance with stricter SLAs (Service Level Agreement).

### Prior art

Systems for monitoring the operation of various equipment are known in the art, by using sensors capable of detecting a certain operational anomaly of interest, as occurs with Smart Mosaic sensors, which are LoRa (Long Range) standard sensors capable of detecting and measuring variations in temperature and acceleration in the active elements of an installation or optical fibre distribution network to be monitored, only enabling the detection of abrupt movements in said active elements, but not being capable, in known solutions, of operating under a reduced energy consumption regime and of detecting and measuring variations in luminosity which occur, for example, inside a passive element, such as a splice, derivation or termination box, when opening its lid, or even of measuring variations of optical power that may occur in the optical fibre used for communication in such a network.

IoT ("Internet of Things") platforms are also known for processing data received from a plurality of sensors from a system for monitoring installations or data distribution networks. However, these platforms are not developed to solve the problems of monitoring the passive elements of an optical fibre distribution network and to allow, through simple construction and low energy consumption sensors, to provide of checks and records at regular intervals and predetermined, of the operational conditions, such as acceleration of movement, variation of temperature and of internal luminosity and also of power in the fibres, of passive elements to be individually monitored and also to emit alarms, in real time, about the occurrence of any operational anomaly detected by one or more sensors operatively associated to a passive element to be individually monitored.

The known solutions define generic tools and that are not capable of allowing easy and safe management, by a network administrator, of preventive maintenance operations and of emergency corrective repairs of the monitored passive elements.

The well-known external plant management systems from MKSolutions, from CircuitVision and Paessler, for example, have the operational capacity of carrying out the registration of the passive elements and operating and maintenance instructions. However, none of them provide sensing as a source for carrying out, manual and automatically, preventive maintenance and emergency repairs or corrective maintenance processes. Although the Paessler's system provides integration with sensors (using Sigfox technology), these sensors only promote the sending of alerts via email, and not the automation of preventive maintenance and emergency corrective repair processes.

The deficiency of well-known solutions can also be mentioned, particularly the one that uses the sensor developed by SmartMosaic, such as the undesirably short operational life of the battery that powers the sensors' operating regime.

In summary, the well-known solutions for the problem considered in the present invention do not present a management of an installation, such as an optical fibre distribution network that promotes the integration of the sensors with a platform capable of generating, manual and automatically, in real time, for field technicians, service orders of emergency corrective repairs and periodic manual orders of maintenance service of the passive elements of the installation, by maintaining records of data representing the conditions monitored by the different sensors. The known solutions do not yet allow monitoring, by means of sensors, the operation of the devices passive of installation or network, such as undue power variations in the network optical fibres, by alerting the administrator of this latter about possible theft and vandalism.

### Summary of the invention

Due to the limitations of well-known solutions, as mentioned above, the present invention has the objective of providing a system for monitoring an optical fibre distribution network, by using sensors capable of detecting the operational conditions of luminosity and temperature in the interior of the passive elements of the network, of abrupt movements of the latter and also of eventual anomalous variations of optical power at points of the network optical fibres, thus, producing data representative of said operational conditions and making this data available to a remote platform, in which said data are associated with the respective sensors, stored, made available to a network administrator, in the form of periodic reports, representing monitored normal operating conditions, or real-time alarms, representing abnormal conditions, said data being manual or automatically sent to a field technician, via a mobile computing device, in the form of instructing of a preventive maintenance activity or of corrective maintenance of an anomaly detected by a sensor.

### Brief description of the drawings

The system of the invention will be described below, making references to the attached drawings, given only as an example and in which:

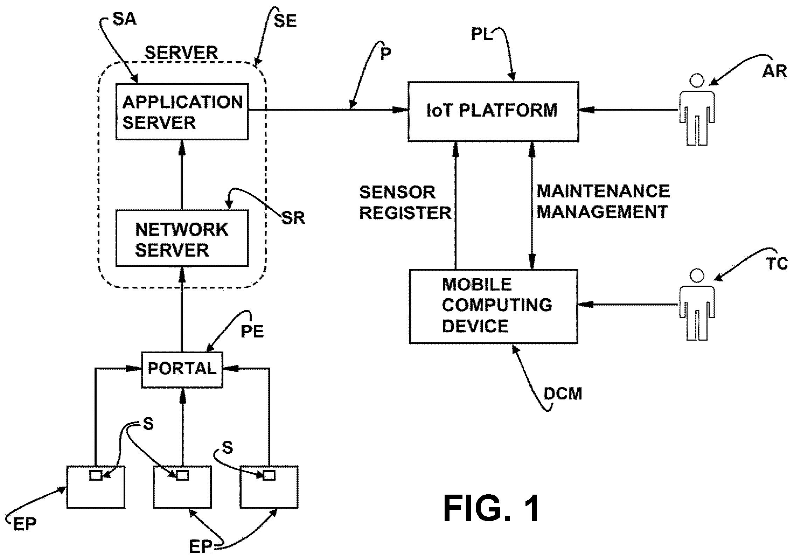

Figure 1 represents a diagram illustrating, in a simplified way, the components of the monitoring system object of the invention, when operating with periodically processed data packets, representing reference operational conditions and which may result in maintenance instructions to a field technician, when authorized by an administrator of the optical fibre distribution network; and

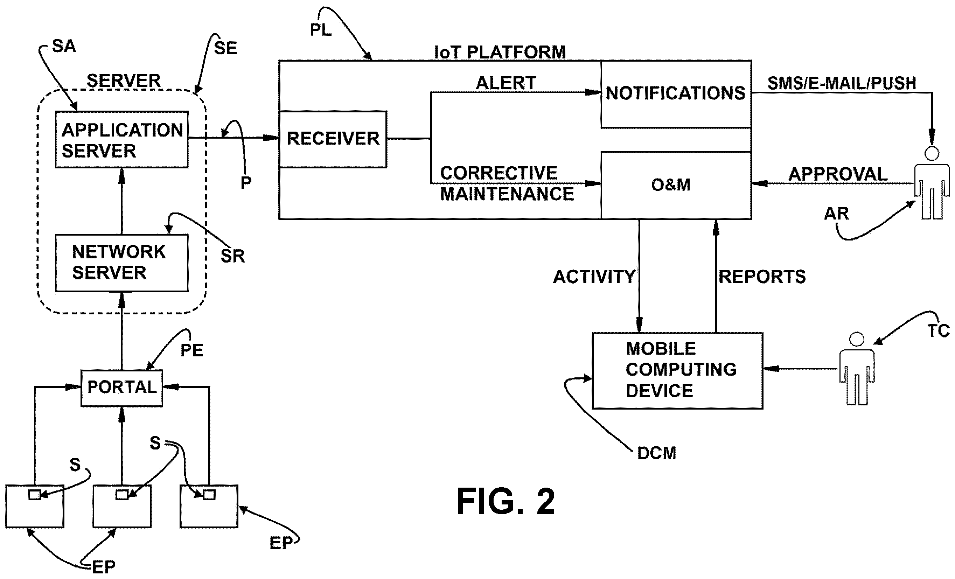

Figure 2 represents a diagram illustrating, in a simplified way, the components of the monitoring system object of the invention, when operating with data packets processed in real time, representing anomalous operational conditions and which automatically promote instructions for corrective maintenance to a field technician, whose corrective operations are verified, after completed, by the administrator of the optical fibre distribution network.

### Description of the invention

As previously mentioned and illustrated in the attached drawings, the referenced monitoring system is applied to optical fibre distribution networks provided with passive elements EP generally defined by optical splice boxes, optical derivation boxes or optical termination boxes, provided with the usual lids for access to its interior and which are not here illustrated in detail, due to the fact that its construction is not the object of the invention and can be carried out in different manners.

Inside each passive element EP of an optical fibre distribution network, a LoRaWAN type S sensor is appropriately mounted, with long range and low power consumption, so that its power battery (not illustrated) has a useful long life of at least 5 years.

Each sensor S contains an accelerometer, a lux meter, a thermometer and also, optionally, an optical power meter (not illustrated) to detect, respectively, abrupt movements in the passive element EP being monitored, the opening of the lid of the latter, the temperature inside said passive element EP and undue power variations in the optical fibres associated with said passive elements EP being monitored, producing data packages representative of normal reference conditions or anomalous conditions related to different parameters under monitoring. As a way to save battery and have a longer useful life, the sensors S are from class A of the LoRaWAN protocol, according to which only sensors can initiate communication or open a channel for communication.

The sensors S of a group of passive elements EP, arranged in a certain region of the network, are designed to allow their wireless communication with a respective input portal PE, preferably of the LoRa standard, using the LoRaWAN protocol. The input portal PE receives the data packets produced by sensors S from the respective group of passive elements EP, encrypting said data packets with a key, said data packets being forwarded, via internet, to a server SE to be described herein after.

The period in which the sensors S are activated, to detect the parameters being monitored, is configurable via downlink in the communication windows opened by the sensors S themselves. However, in order to save battery, the activation of the sensors S can occur, for example, every 12 or 24 hour period. At each activation, the sensors S send a data packet, called "keep alive", which consists of transferring, to the respective input portal PE, of minimal information regarding the sensor operating regime, such as, for example, the battery level. The size of this "keep alive" data packet must be as small as possible, since the larger the data packet, the longer it will take to be transmitted. For Anatel approval, it is necessary that the communication window be a maximum of 400ms.

When a change (anomalous condition) is detected in the accelerometer and/or in the lux meter in a sensor S or in the internal temperature of the passive element or also an undue drop of optical power in the fibres, the respective sensor S goes into an alert state and sends data packets every 20 seconds, during 2 minutes, for example, because, in this way, it is guaranteed that at least one data packet, containing the alert information, will be transmitted to a subsequent level or stage of the monitoring system. The information contained in these alert packages is related to the parameters object of analysis and which, in this case, is the information about the axes of the accelerometer (x, y and z in m/s²), the lux meter (in lux), the temperature meter in °C and the optical power meter in Decibels.

The input portals PE of the LoRa standard have "packet brokers" specific to the LoRaWAN protocol, which have the role of receiving packets from a number of sensors S, queuing these packets and forwarding them to the server SE that operates in the LoRa standard.

In general terms, the server SE comprises a network server SR that receives data packets from the input portal PE and has the function of routing and authenticating communication between the hardware, defined by a group of sensors S and by the respective input portal PE, and an application server AS, which complements the server SE. In this process, market tools (TTN, TTI, Everynet, among others) are used and whose development is not the object of the present invention. For said authentication, in the firmware of the sensor S itself, information (Dev-EUI, App-EUI, App-Key, Dev-Addr, Ntw-Session-Key and App-Seesion-Key) are described, in which, through a join/negotiation (OTAA) or manual (ABP) process authenticate each sensor S in the application server AS, so that the communication channel is established.

In Over-The-Air (OTAA) activations, only the Dev-EUI and App-EUI are needed to register a sensor on the application server SA, since the join process is done by the network server SR and the remaining of the keys are negotiated with the sensors S. In activation by personalization (ABP), all information is necessary at both ends (sensor S and application server SA), since the steps of negotiation of communication keys do not exist.

The server SE is integrated, via internet, with an IoT platform using HTTP hooks, which consist of configuring URLs/endpoints on the application server SA so that it knows to where to forward the packets received from the groups of sensors S, through the respective input portals PE. These URLs/endpoints refers to APIs (Application Programming Interface) on the IoT platform, which will receive and process the data for storage, display and sending of alerts, depending on the result of the monitored data and the programming of the network administrator AR.

The IoT platform operates for the network administrator AR with 100% in the cloud and accessible from any location via web browser, having Multitenant characteristics to support multiple organizations/companies/administrators within the same infrastructure. The IoT platform receives, stores and displays information about the sensors S previously recorded on it and associated with the geographic location of the active element to which they are associated, in table, "dashboard" and geographic map formats, wherein in the case of alerts arising from the sensors S, the IoT platform is capable to send notifications via SMS, email or "push", to the network administrator AR. The IoT platform also includes O&M administrator means, which enable the manual and automatic generation of field activities, respectively, preventive maintenance and corrective maintenance, generally under emergency, with the generation of reports to be analyzed by the network administrator AR.

The system also includes the use of an application to be downloaded on mobile computing devices DCM, such as cell phones or tablets, to be carried by field technicians TC and which have functionalities for registering passive elements EP and the respective sensors S and also of maintenance management. Further to the information about passive elements EP, the application also captures the geolocation of the mobile computing device DCM, preferably a cell phone, for registration and authentication directly on the basis of the IoT platform, in which the field technicians are created on the IoT platform, so that they can access the application and carry out their activities.

The registration process of the passive elements EP consists of scanning a QR Code, to be added to the sensor S or printed on the passive element EP itself, or manually filling the information of Dev EUI of the sensor S, its description and its serial code for registration on the IoT platform.

Through the GPS of the mobile computing device DCM, the latitude and longitude of sensor S are also packaged, together with the information mentioned above, which are then sent to the IoT platform for registration of the passive element EP and of the respective sensor S, responsible for managing the optical fibre distribution network.

It is thus still possible to manage the activities that the field technician TC must carry out, containing a check-in/check-out mechanism on the passive elements EP, through QR Code.

The network maintenance management process can be worked in two ways: manual or automatic.

In the manual management process, an network administrator AR, with access to the IoT platform, creates maintenance activities and relates them to a time window, passive elements EP or the respective sensor S of interest and also to a technician field TC who will be responsible for the activity of inspection, maintenance and, if necessary, correction of one or more passive elements EP determined by the network administrator AR.

In the automatic management process, a packet of alert data, produced by a sensor S, automatically creates an immediate and corrective activity instruction, so that the field technician TC, closest to the passive element EP of which the alert originated, carries out the corrective activity.

In real time, the field technician TC will have access to the activity instruction on his mobile computing device DCM, in which the necessary information, to the realization of the instructed activity, are already contained. Upon arriving at each passive element EP, the field technician TC will carry out a check-in process (manual or via QR Code), filling out a questionnaire, uploading photos and check-out (manual or via QR Code). After the maintenance operation of an passive element EP has been completed, the maintenance operation is considered complete and it is possible to access a report about said maintenance operation on the IoT platform.

A maintenance operation may have, for example, the following statuses: "Open", "In progress", "Under approval" and "Completed". Thus, as the field technician TC finalizes his report about the activity instructed to him, by sending it to the IoT platform, the report is analyzed by the network administrator AR, via the O&M administrator means of the IoT platform, approving or reopening the activity previously instructed and carried out by the field technician TC.

In addition to persistence context and historical description of activities carried out on the network, the scheduled maintenance activities present a relevant functional advantage, since they tend to reduce or even to eliminate corrective operations in response to alarms about anomalies in the distribution network. Thus, when a passive element EP is violated and/or moved and is undergoing maintenance, the network administrator AR with access to the IoT platform will not receive undesirable alerts.

The system has an artificial intelligence which is responsible for interpreting the data packets received from the sensors S and for crossing these data packets with a history of behavior from the sensors S. Thus, it is possible to characterize false alarms and avoid the sending of work orders, as well as verification teams, in historically unnecessary situations.

The artificial intelligence responsible for this type of interpretation is adaptive, that is, it learns over time what the alarm behavior is in each of the sensors. In other words, it can be used in any scenario as it has the ability to adapt independently of a specific model or standard.

The present system reduces the need for preventive actions, resulting in a greater efficiency in its operation, improving the quality of the service delivered to the network customers, and in an greater productivity for the maintenance teams, thus, reducing the operational costs of the network.

Although only one embodiment of the system in question has been presented here, it must be understood that changes may be made to the form and arrangement of its constituent elements, without departing from the scope defined in the claim set that accompanies this description.

## Claims

1. A system for monitoring optical fibre distribution networks, said networks being provided with passive elements (EP) defined by optical splice boxes, optical derivation boxes, optical termination boxes or optical fibres, **characterized by** the fact that it comprises:
- a sensor (S) of the LoRaWAN type, powered by a battery and provided with an accelerometer, a lux meter, a thermometer and, optionally, an optical power meter and mounted inside a respective passive element (EP), in order to detect abrupt movements of the latter, variations of operational conditions of luminosity and of temperature in its inside and also, optionally, undue variations in power in the optical fibres associated with said passive element (EP) and periodically to produce data packets representing reference operating conditions and, in real time, data packages representing anomalous operating conditions detected by the sensor (S);
- a input portal PE) of the LoRa standard, maintained in wireless communication with the sensors (S) of a plurality of passive elements (EP), to receive, from said sensors (S), the data packets representing the reference operating conditions and anomalous operating conditions, by encoding said data packets with a key;
- a server (SE) in LoRa standard that receives, from the input portals (PE), via internet, the data packets, promoting their decoding and authentication; and
- a platform (IoT) receiving, from the server (SE) (LoRa), via internet, the data packets representing reference operational conditions and anomalous operational conditions, associating said data with the respective sensors (S) from which they have originated, storing said data and making it available to a network administrator (AR), in the form of reports representing reference operational conditions and which are selectively sent to a field technician (TC), via a mobile computing device (DCM), and representative alarms of anomalous operating conditions and which are automatically sent to a field technician (TC), via a mobile computing device (DCM) and in the form of a corrective activity instruction for the anomaly detected by a sensor (S).

2. The system, according to claim 1, **characterized by** the fact that the server (SE) comprises a network server (SR) and an application server (AS), wherein the network server (SR) receives the data packets from the input portals (PE) and provides the routing and authentication of the communication between each group of sensors (S), with the respective input portals (PE), and the application server (AS).

3. The system, according to claim 2, **characterized by** the fact that the authentication of the communication between each group of sensors (S), with the respective input portals (PE), and the application server (AS), is done in the firmware of the sensors (S), in which information (Dev-EUI, App-EUI, App-Key, Dev-Addr, Ntw-Session-Key and App-Seesion-Key)is described, in which, through a join/ negotiation (OTAA) process or manual (ABP), authenticate each sensor (S) in the application server (AS), establishing the communication channel.

4. The system, according to any one of claims 1 to 3, **characterized by** the fact that the period in which the sensors (S) are activated, to detect the parameters being monitored, is configurable via downlink in communication windows opened by the sensors themselves (S), wherein at each activation, the S sensors send a "keep alive" data packet, transferring, to the respective input portals (PE), minimum information about the operating regime of each sensor (S).

5. The system, according to claim 4, **characterized by** the fact that each sensor (S), detecting an anomalous condition in the monitored parameters, goes into an alert state, transmitting, at intervals of seconds and for minutes, data packets to a subsequent level of the monitoring system.

6. The system, according to any of claims 1 to 5, **characterized by** the fact that the platform (IoT) operates 100% in the cloud, accessible via web browser, presenting Multitenant characteristics and receiving, storing and displaying information, in table formats, "dashboard" and geographic map, on the sensors (S) previously registered there and associated with the geographic location of the passive element (EP) to which they are associated.

7. The system, according to claim 6, **characterized by** the fact that the platform (IoT), upon receiving alerts from sensors (S), sends notifications, via SMS, email or "push", to the network administrator (AR), wherein the platform (IoT) is provided with O&M management means capable of generating, manually and automatically, field activities, respectively, of preventive maintenance and corrective maintenance of an anomaly, with the generation of reports to be analyzed by the administrator network (AR).

8. The system, according to claim 7, **characterized by** the fact that it includes an application to be downloaded on mobile computing devices (DCM), carried by field technicians (TC) and which has registration functionalities, on the platform (IoT), of the active elements (EA) and respective sensors (S), of maintenance management and geolocation of the mobile computing device (DCM).
